# EUROPÄISCHE PATENTANMELDUNG

(11) **EP 2 053 295 A2**
(43) Veröffentlichungstag der Anmeldung: **29.04.2009**
(21) Anmeldenummer: 08075819.6
(22) Anmeldetag: 09.10.2008
(51) Int. Cl.: F16L 41/03, F24D 19/02

(54) **Prüfgarnitur**

(30) Priorität: 19.10.2007 DE 202007014858 U
(71) Anmelder: KERMI GmbH, 94447 Plattling (DE)
(72) Erfinder: Habermann, Arno, 94036 Passau (DE); Harrer, Fritz, 94486 Gergweis (DE)
(74) Vertreter: Patentanwälte Bressel und Partner

(57) **Zusammenfassung**

Die Erfindung betrifft eine Prüfgamitur zur Vormontage und Dichtprüfung von Rohranschlüssen im Heizungsbau, insbesondere zur exakten Anbindung von Rohranschlüssen mindestens zweier Heizungssysteme, bestehend aus einem Grundkörper (1) mit dicht verschlossenen Endstücken (1.1, 1.2) und vier rechtwinklig zum Grundkörper (1) in einer Ebene und auf gleicher Höhe angeordneten sowie in Normabständen voneinander beabstandeten Rohranschlussstutzen (1.3, 1.4, 1.5, 1.6) für den Anschluss an die Vor- und Rücklaufleitungen eines Flächentemperiersystems und eines Heizkreissystems für mindestens einen Heizkörper.

## Beschreibung

Die Erfindung betrifft eine Prüfgamitur zur Vormontage und Dichtprüfung von Rohranschlüssen im Heizungsbau, insbesondere zur exakten Anbindung von Rohranschlüssen mindestens zweier Heizungssysteme in der Rohbauphase.

Aus dem Stand der Technik sind Vorrichtungen zur Montage von Heizkörpern in der Rohbauphase bekannt. Die dabei auftretenden Probleme werden meist durch an die Gebäudewand zu befestigende Montagelehren gelöst. Eine derartige Montagelehre für Fertigheizkörper wird z.B. in der DE 295 05 110 U1 beschrieben. Mit der Montagelehre lässt sich eine Anschlussverrohrung erreichen, ohne dass dazu der Heizkörper selber erforderich ist. Das Anschlussstück lässt sich dabei mit den Anschlussleitungen verschrauben, so dass nach dem entfernen der Montagelehre sowohl die für die spätere Heizkörpermontage benötigten Anhängepunkte als auch die Anschüsse maßgenau fest. Durch das vormontierte Anschlussstück ist weiter ein Abdrücken des gesamten Systems ohne Heizkörper möglich.
In der DE 102 55 695 A1 wird ein Universalfitting für fluidführende Leitungen in Heizungs- und Sanitärinstallationen beschrieben. Das Universalfitting soll dabei auch zur universellen Anschlussverbindung für Fußboden und Wandheizungen dienen. Wie dabei eine Vormontage für die einzelnen in Normabständen vorliegenden Anschlüsse an die verschiedenen Heizkreise erfolgen soll wird aber nicht beschrieben. Weiter wird eine Druckprüfung der Systeme mit dem Universalfitting nicht erwähnt.

Der Erfindung liegt die Aufgabe zugrunde, eine Vorrichtung der eingangs genannten Art zu schaffen, die die Vormontage der Anschlüsse zweier Heizkreissysteme ermöglicht bzw. verbessert.
Erfindungsgemäß wird diese Aufgabe durch die Merkmale des Anspruchs 1 gelöst. Vorteilhafte Ausbildungen der Erfindung sind in den zugehörigen Ansprüchen 2 bis 10 enthalten.
Demnach beinhaltet die Erfindung eine Prüfgamitur zur Vormontage und Dichtprüfung von Rohranschlüssen im Heizungsbau, insbesondere zur exakten Anbindung von Rohranschlüssen mindestens zweier Heizungssysteme, die aus einem Grundkörper mit dicht verschlossenen Endstücken und vier rechtwinklig zum Grundkörper in einer Ebene und auf gleicher Höhe angeordneten sowie in Normabständen voneinander beabstandeten Rohranschlussstutzen für den Anschluss an die Vor- und Rücklaufleitungen eines Flächentemperiersystems und eines Heizkreissystems für mindestens einen Heizkörper besteht.

Vorteilhaft besteht der Grundkörper dabei aus einem Rundprofilrohr und einen Anschlussstutzen für ein Entlüftungs- und Spülventil.

Die Nabenabstände der mittigen Rohranschlussstutzen sind dabei von der Mitte des Grundkörpers jeweils 25 mm beabstandet, so dass der Nabenabstand zwischen den beiden mittigen Rohranschlussstutzen 50 mm beträgt. Vorteilhaft sind diese Rohranschlussstutzen für den Anschluss der Vor- und Rücklaufleitungen eines Heizkörpers vorgesehen sind.

Nach einer weiteren Ausführung der Erfindung ist jeweils ein Rohranschlussstutzen nahe einem der Endstücke angeordnet, wobei die Nabenabstände dieser Rohranschlussstutzen zu den benachbarten mittigen Rohranschlussstutzen jeweils 100 mm betragen. Die äußeren Rohranschlussstutzen sind bevorzugt für den Anschluss der Vor- und Rücklaufleitungen eines Flächentemperiersystems vorgesehen.
Besonders vorteilhaft ist die Tatsache, dass die Prüfgamitur bei der Endmontage durch eine Anschlussgamitur für Heizkörper und Flächentemperierung austauschbar ist und mehrfach wieder verwendbar ist.

Nach einer weiteren Ausführung der Erfindung ist vorgesehen, dass zwischen den mittigen Rohranschlussstutzen in der Mitte des Grundkörpers eine fluiddichte Trennung vorgesehen ist.
Vorteilhaft ist die Trennung als einstellbare Absperrung ausgeführt ist, die eine Regelung des Durchflusses des Heiz- oder Kühlmedium ermöglicht.

Nach einer anderen Ausführung ist vorgesehen, dass zwischen den mittigen Rohranschlussstutzen und den daran angeschlossenen Rohrleitungen eine separate Absperrvorrichtung angeordnet ist.
Durch die erfindungsgemäße Garnitur wird vorteilhaft das Problem gelöst vier Anschlussrohre in der Rohbauphase so exakt rechtwinklig aus der Wand zu führen und zu fixieren, dass später ein einfacher Austausch mit einer Anschlussgamitur für ein Flächenheizsystem und einen Heizkörper erfolgen kann.
Durch die erfindungsgemäße Prüfgamitur wird der Schutz einer hochwertigen Funktionseineinheit "Anschlussgarnitur" in der Rohbauphase ermöglicht. Die Prüfgamitur ermöglicht besonders vorteilhaft eine gleichzeitige exakte Vormontage und Dichtprüfung von Rohranschlüssen für Heizkörperanbindung und Fußbodenheizung rechtwinklig in variabler Höhe aus der Wand.

Dabei werden alle Rohranschlüsse durch die Prüfgamitur im geforderten Nabenabstand auf einer Ebene fixiert. Mit der Positionierung der Anschlussgamitur wird gleichzeitig die Position eines Heizkörpers (Mitte Vormontageeinheit = Mitte Heizkörper) festgelegt. Nach der Rohbauphase kann dann ein problemloser Austausch mit der Anschlussgamitur erfolgen (somit geschützt vor Verschmutzung, Beschädigung und Diebstahl). Sämtliche Rohranschlüsse sind dann komplett unter einer Heizkörperblende verdeckt. Die Prüfgamitur ist außerdem wieder verwendbar.

Weitere Vorteile und Einzelheiten der Erfindung ergeben sich aus den nachfolgend beschriebenen und in den Zeichnungen dargestellten Ausführungsbeispielen.

### Es zeigen:

- Fig. 1: eine perspektivische Ansicht einer Prüfgamitur,
- Fig.2: eine Vorderansicht der Prüfgamitur,
- Fig.3: die Vorderansicht einer weiteren Variante in Schnittdarstellung.

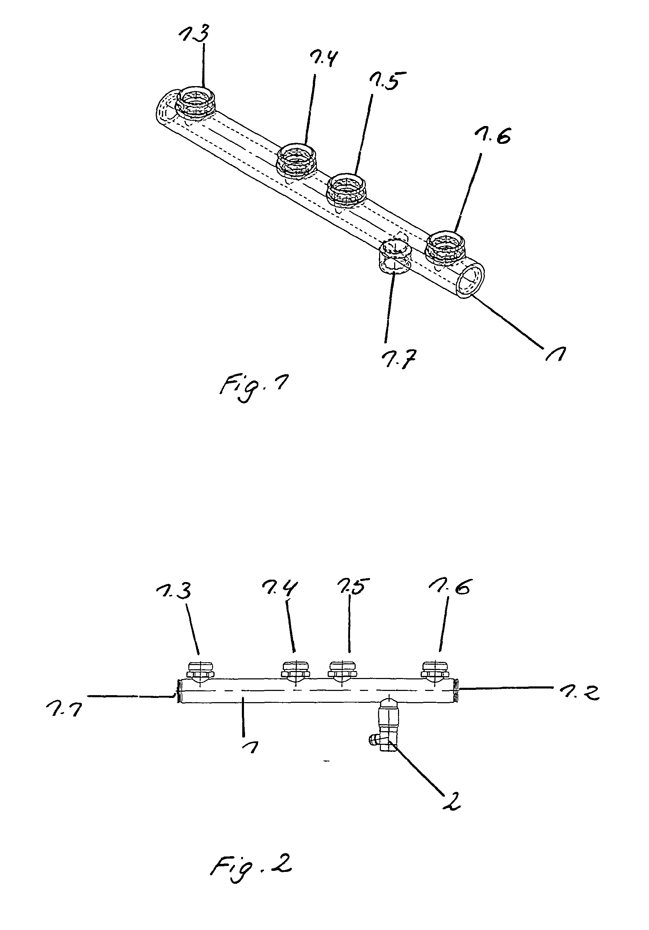

Die Figur 1 zeigt eine perspektivische Ansicht der erfindungsgemäßen Prüfgamitur (nur Grundkörper und Anschlussstutzen) zur Vormontage und Dichtprüfung von Rohranschlüssen im Heizungsbau, insbesondere zur exakten Anbindung von Rohranschlüssen mindestens zweier Heizungssysteme. Diese besteht gemäß Fig. 2 aus einem Grundkörper (1) mit den dicht verschlossenen Endstücken (1.1, 1.2) und vier rechtwinklig zum Grundkörper (1) in einer Ebene und auf gleicher Höhe angeordneten sowie in Normabständen voneinander beabstandeten Rohranschlussstutzen (1.3, 1.4, 1.5, 1.6) für den Anschluss an die Vor- und Rücklaufleitungen eines Flächentemperiersystems und eines Heizkreissystems für mindestens einen Heizkörper. Der Grundkörper besteht vorzugsweise aus einem Rundprofilrohr und weist zusätzlich einen Anschlussstutzen (1.7) für ein Entlüftungs-und Spülventil (2) auf. Die Nabenabstände der Rohranschlussstutzen (1.4, 1.5) sind von der Mitte des Grundkörpers (1) jeweils 25 mm beabstandet, so dass der Nabenabstand zwischen den beiden mittigen Rohranschlussstutzen (1.4, 1.5) 50 mm beträgt. Die Rohranschlussstutzen (1.4, 1.5) sind bevorzugt für den Anschluss der Vor- und Rücklaufleitungen eines Heizkörpers vorgesehen. Weiter ist jeweils ein Rohranschlussstutzen (1.3, 1.6) nahe einem der Endstücke (1.1) bzw. (1.2) angeordnet, wobei die Nabenabstände der Rohranschlussstutzen (1.3, 1.6) zu den benachbarten Rohranschlussstutzen (1.4) bzw. (1.5) jeweils 100 mm betragen. Die Rohranschlussstutzen (1.3, 1.6) sind vorzugsweise für den Anschluss der Vor- und Rücklaufleitungen eines Flächentemperiersystems vorgesehen. Die Prüfgamitur ist bei der Endmontage durch eine Anschlussgamitur für Heizkörper und Flächentemperierung austauschbar und mehrfach wieder verwendbar.

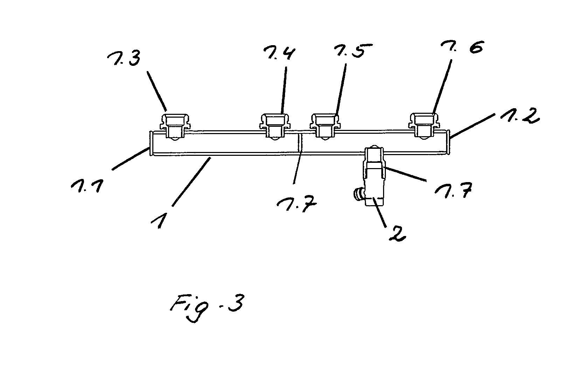

In der Fig. 3 ist eine Prüfgamitur dargestellt, die zwischen den Rohranschlussstutzen (1.4, 1.5) in der Mitte des Grundkörpers (1) eine fluiddichte Trennung (1.7) vorsieht. Dabei kann die Trennung als einstellbare Absperrung ausgeführt sein, die eine Regelung des Durchflusses des Heiz- oder Kühlmedium ermöglicht. Weiter kann zwischen den Rohranschlussstutzen (1.4, 1.5) und den daran angeschlossenen Rohrleitungen eine separate Absperrvorrichtung angeordnet sein.

## Patentansprüche

1. Prüfgamitur zur Vormontage und Dichtprüfung von Rohranschlüssen im Heizungsbau, insbesondere zur exakten Anbindung von Rohranschlüssen mindestens zweier Heizungssysteme, bestehend aus einem Grundkörper (1) mit dicht verschlossenen Endstücken (1.1, 1.2) und vier rechtwinklig zum Grundkörper (1) in einer Ebene und auf gleicher Höhe angeordneten sowie in Normabständen voneinander beabstandeten Rohranschlussstutzen (1.3, 1.4, 1.5, 1.6) für den Anschluss an die Vor- und Rücklaufleitungen eines Flächentemperiersystems und eines Heizkreissystems für mindestens einen Heizkörper.

2. Prüfgarnitur nach Anspruch 1, **dadurch gekennzeichnet, dass** der Grundkörper aus einem Rund profilrohr besteht und einen Anschlussstutzen (1.7) für ein Entlüftungs-und Spülventil (2) aufweist.

3. Prüfgarnitur nach den Ansprüchen 1 und 2, **dadurch gekennzeichnet, dass** die Nabenabstände der Rohranschlussstutzen (1.4, 1.5) von der Mitte des Grundkörpers (1) jeweils 25 mm beabstandet sind, so dass der Nabenabstand zwischen den beiden mittigen Rohranschlussstutzen (1.4, 1.5) 50 mm beträgt.

4. Prüfgarnitur nach einem der o.g. Ansprüche, **dadurch gekennzeichnet, dass** die Rohranschlussstutzen (1.4, 1.5) für den Anschluss der Vor- und Rücklaufleitungen eines Heizkörpers vorgesehen sind.

5. Prüfgarnitur nach einem der o.g. Ansprüche, **dadurch gekennzeichnet, dass** jeweils ein Rohranschlussstutzen (1.3, 1.6) nahe einem der Endstücke (1.1) bzw. (1.2) angeordnet ist und die Nabenabstände der Rohranschlussstutzen (1.3, 1.6) zu den benachbarten Rohranschlussstutzen (1.4) bzw. (1.5) jeweils 100 mm betragen.

6. Prüfgamitur nach einem der o.g. Ansprüche, **dadurch gekennzeichnet, dass** die Rohranschlussstutzen (1.3, 1.6) für den Anschluss der Vor- und Rücklaufleitungen eines Flächentemperiersystems vorgesehen sind.

7. Prüfgamitur nach einem der o.g. Ansprüche, **dadurch gekennzeichnet, dass** diese bei der Endmontage durch eine Anschlussgamitur für Heizkörper und Flächentemperierung austauschbar ist und mehrfach wieder verwendbar ist.

8. Prüfgamitur nach einem der o.g. Ansprüche, **dadurch gekennzeichnet, dass** zwischen den Rohranschlussstutzen (1.4, 1.5) in der Mitte des Grundkörpers (1) eine fluiddichte Trennung (1.7) vorgesehen ist.

9. Prüfgamitur nach Anspruch 8, **dadurch gekennzeichnet, dass** die Trennung als einstellbare Absperrung ausgeführt ist, die eine Regelung des Durchflusses des Heiz- oder Kühlmedium ermöglicht.

10. Prüfgamitur nach einem der Ansprüche 1 bis 7, **dadurch gekennzeichnet, dass** zwischen den Rohranschlussstutzen (1.4, 1.5) und den daran angeschlossenen Rohrleitungen eine separate Absperrvorrichtung angeordnet ist.
